# EUROPEAN PATENT APPLICATION

(11) **EP 4 755 236 A1**
(43) Date of publication of application: **10.06.2026**
(21) Application number: 24849520.2
(22) Date of filing: 26.07.2024
(51) Int. Cl.: A24F 40/95, A24F 40/40, A24F 40/42, A24F 40/46, A24F 40/90

(54) **AEROSOL-GENERATING DEVICE**

(30) Priority: 01.08.2023 KR 20230100362; 20.11.2023 KR 20230160226
(71) Applicant: KT&G Corporation, Daedeok-gu Daejeon 34337 (KR)
(72) Inventor: WOO, Young Min, Hwaseong-si, Gyeonggi-do 18391 (KR); KIM, Jae Hyuk, Seoul 06352 (KR); PARK, Sang Cheol, Suwon-si, Gyeonggi-do 16469 (KR); SEO, Jang Won, Daejeon 34023 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010952
(87) International publication number: WO 2025/028951

(57) **Abstract**

An aerosol-generating device includes an aerosol generator configured to generate an aerosol, a main body in which the aerosol generator is arranged, and a battery pack including a battery configured to supply power to the aerosol generator and a battery case accommodating the battery, wherein one of the main body and the battery pack includes a hook protrusion maintaining a position of the battery pack with respect to the main body, the other one of the main body and the battery pack includes a hook groove into which the hook protrusion is coupled, and the battery pack is detachably coupled to the main body by a sliding movement with respect to the main body.

## Description

### Technical Field

Embodiments relate to an aerosol-generating device, and more particularly, to an aerosol-generating device to which a battery is detachably coupled.

### Background Art

Recently, the demand for alternative methods for overcoming the shortcomings of general cigarettes has increased. For example, there is an increasing demand for a system for generating aerosols by heating a cigarette or an aerosol generating material by using an aerosol generating device, rather than by burning cigarettes. Accordingly, research on heating-type aerosol generating devices has been actively conducted.

### Disclosure of Invention

### Technical Problem

Aerosol-generating devices use rechargeable batteries for portability, but battery cells have a limited lifespan and thus need to be replaced when their lifespan ends. Accordingly, there is a growing need to develop batteries that may be easily removed by users while accomplishing the purposes of reducing electronic waste, protecting the environment, and extending the lifespan.

In addition, even when using a removable battery, a stable electrical connection structure of the removable battery is required such that power is stably supplied to the aerosol-generating device.

In addition, a mounting structure of the removable battery needs to be improved such that a user may conveniently perform an action of coupling the removable battery to the aerosol-generating device or removing the removable battery from the aerosol-generating device.

The embodiments aim to provide an aerosol-generating device to which a battery is detachably coupled.

In addition, the embodiments aim to provide an aerosol-generating device that allows a user to conveniently attach or detach a battery.

In addition, the embodiments aim to provide a battery structure that prevents a user from incorrectly mounting the battery in the aerosol-generating device.

In addition, the embodiments aim to provide a battery support structure for a stable electrical connection between the aerosol-generating device and the battery.

The technical problems of the disclosure are not limited to the above description, and other technical problems may be derived from the embodiments described below.

### SOLUTION TO PROBLEM

According to an embodiment, an aerosol-generating device includes an aerosol generator configured to generate an aerosol, a main body in which the aerosol generator is arranged, and a battery including a battery configured to supply power to the aerosol generator and a battery case accommodating the battery. The battery may be detachably coupled to the main body by a sliding movement with respect to the main body.

One of the main body and the battery may include a hook protrusion maintaining a position of the battery with respect to the main body, and the other one of the main body and the battery may include a hook groove into which the hook protrusion is coupled.

One of the hook protrusion and the hook groove may be arranged on an end face of a battery pack in an insertion direction of the battery pack, and the other one of the hook protrusion and the hook groove may be arranged on the inner wall surface of the main body corresponding to the end face of the battery pack.

One of the main body and the battery pack may further include a slide protrusion to guide the sliding movement of the battery pack with respect to the main body, and the other one of the main body and the battery pack may further includes a slide groove into which the slide protrusion is coupled.

One of the hook protrusion and the hook groove may be arranged on a surface of the main body or the battery pack on which the slide protrusion is arranged, and the other one of the hook protrusion and the hook groove may be arranged on a surface of the main body or the battery pack in which the slide groove is arranged.

The main body may further include a main body terminal, and the battery pack may further include a battery terminal configured to be electrically connected to the main body terminal. The main body terminal may be arranged in one of the slide protrusion and the slide groove, and the battery terminal may be arranged in the other one of the slide protrusion and the slide groove.

The main body may further include a main body terminal, the battery pack may further include a battery terminal configured to be electrically connected to the main body terminal, the main body terminal may be arranged in one of the hook protrusion and the hook groove, and the battery terminal may be arranged in the other one of the hook protrusion and the hook groove.

A shape of a cross-section of the battery pack in a direction crossing an insertion direction of the battery pack may be asymmetrical.

The main body may further include an accommodation space accommodating the battery pack and a battery cover coupled to the main body such that the battery pack is covered. The battery cover may open the accommodation space by a sliding movement with respect to the main body.

One of the battery cover and the main body may include a cover slide protrusion to guide a sliding movement of the battery cover with respect to the main body, and the other one of the battery cover and the main body may further include a cover slide groove into which the cover slide protrusion is coupled.

One of the battery cover and the main body including the cover slide protrusion may further include a cover rotation protrusion arranged on an end of the cover slide protrusion. The cover slide groove may include a cover rotation groove into which the cover rotation protrusion is coupled.

The battery cover may slidingly move with respect to the main body and then rotate around the cover rotation protrusion to open the accommodation space.

The cover slide groove may extend in a direction crossing an insertion direction of the battery pack.

The main body may further include a main body pressurization portion to elastically press the battery pack.

The battery cover may further include a battery pressurization portion to elastically press the battery pack.

The cover slide groove may extend at an incline with respect to an insertion direction of the battery pack.

The battery cover may further include a cover protrusion contacting an end face of the battery pack and pressing the battery pack toward an insertion direction of the battery pack.

The battery pack may further include a battery terminal, the battery cover may further include a cover terminal configured to be electrically connected to the battery terminal, the battery terminal may be arranged on an end face of the battery pack in an insertion direction of the battery pack, and the cover terminal may be arranged on a surface of the battery cover in contact with the battery terminal.

### Advantageous Effects of Invention

In the aerosol-generating device according to the embodiments described above, a battery may be detachably coupled to the main body.

In addition, in the aerosol-generating device according to the embodiments, the battery may be inserted into the main body by a sliding movement, the position of the battery with respect to the main body may be fixed, and the battery may be easily attached or detached.

In addition, in the aerosol generating device according to the embodiments, the shape of the cross-section of the battery in the insertion direction may be formed to be asymmetrical so as to prevent a user from incorrectly mounting the battery in the main body.

In addition, in the aerosol generating device according to the embodiments, since a coupled state between the main body and the battery may be stably maintained by a battery cover and a pressurization portion, an electrical connection and physical support structure between the battery and the main body may be easily maintained.

Effects of the embodiments are not limited to the above description, and more various effects are included in the present specification.

### Brief Description of Drawings

FIGS. 1 to 3 are conceptual diagrams schematically illustrating an aerosol-generating device according to an embodiment.
FIG. 4 is a perspective view of elements of the aerosol-generating device according to another embodiment, the elements being illustrated in a separated state.
FIG. 5 is a cross-sectional view of the aerosol-generating device of the embodiment of FIG. 4.
FIG. 6 is a perspective view illustrating a battery pack according to another embodiment.
FIGS. 7A and 7B are conceptual diagrams sequentially showing a process of opening a battery cover of an aerosol-generating device according to another embodiment.
FIGS. 8A and 8B are conceptual diagrams sequentially showing a process of opening a battery cover of an aerosol-generating device according to another embodiment.
FIG. 9 is a block diagram of the aerosol-generating device according to the embodiments illustrated in FIGS. 1 to 8B.

### Best Mode for Carrying out the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the susceptor may be a magnetic body that generates heat by an external magnetic field. As the susceptor is positioned inside the coil and a magnetic field is applied to the susceptor, the susceptor generates heat to heat an aerosol generating article. In addition, optionally, the susceptor may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

Hereinafter, embodiments of the present disclosure will be described in detail with reference to the drawings.

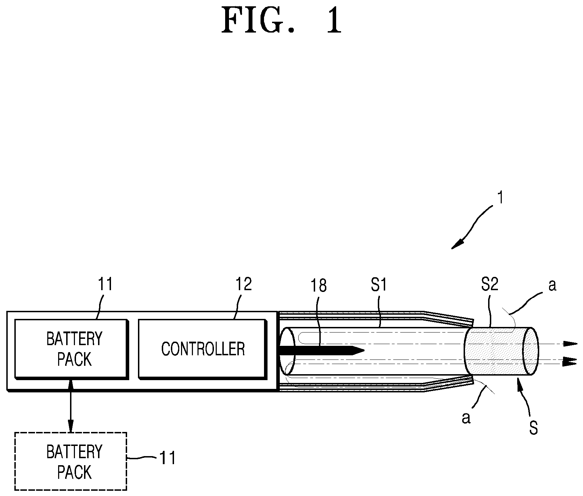

FIGS. 1 to 3 are conceptual diagrams schematically illustrating an aerosol-generating device according to an embodiment.

FIGS. 1 to 3 are diagrams of examples of the aerosol-generating device. FIGS. 1 to 3 illustrate examples of the aerosol-generating device in which a cigarette (having the same meaning as an aerosol-generating article or stick) is inserted.

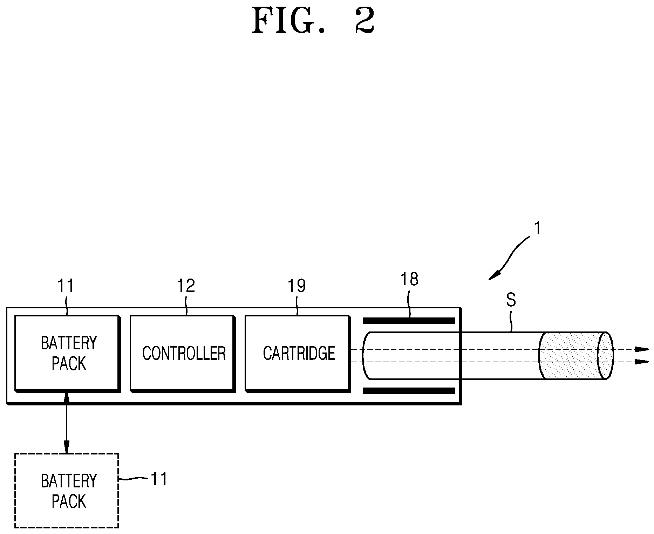

Referring to FIG. 1, an aerosol-generating device 1 may include a battery pack 11, a controller 12, and a heater 18. Referring to FIG. 2, the aerosol-generating device 1 may further include a cartridge 19 (or a vaporizer). An aerosol-generating article S may be inserted inside the aerosol-generating device 1.

When the aerosol generating article S is inserted into the aerosol generating device 1, the aerosol generating device 1 may operate the heater 18 and/or the cartridge 19 to generate aerosol from the aerosol generating article S and/or the cartridge 19. The aerosol generated by the heater 18 and/or the cartridge 19 is delivered to a user by passing through the aerosol generating article S. As necessary, even when the aerosol generating article S is not inserted into the aerosol generating device 1, the aerosol generating device 1 may heat the heater 18.

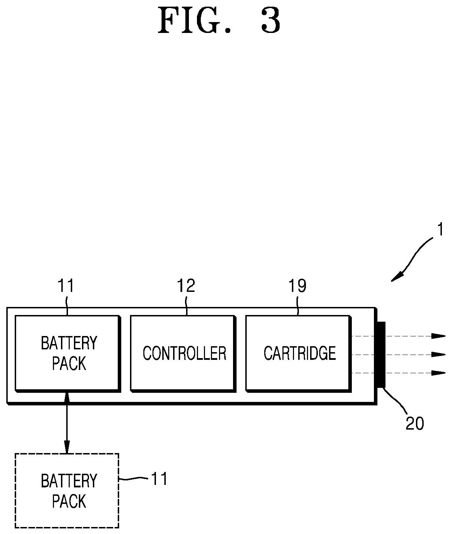

The heater 18 may be omitted. Referring to FIG. 3, the aerosol-generating device 1 includes the battery pack 11, the controller 12, and the cartridge 19. The aerosol-generating device 1 of FIG. 3 has no space into which the aerosol-generating article S may be inserted and the heater 18 for heating the aerosol-generating article S is not arranged in the aerosol-generating article 1.

The elements related to the present embodiment are illustrated in the aerosol-generating device 1 of FIGS. 1 to 3. Therefore, in addition to the elements illustrated in FIGS. 1 to 3, other components may be further included in the aerosol-generating device 1.

The elements of the aerosol-generating device 1 illustrated in FIGS. 1 to 3 are illustrated as being arranged in a row. However, an internal structure of the aerosol-generating device 1 is not limited to the structure illustrated in FIG. 1. For example, the cartridge 19 and the heater 18 may be arranged in parallel. That is, according to a design of the aerosol-generating device 1, an arrangement of the battery pack 11, the controller 12, the heater 18, and the cartridge 19 may be changed.

The battery pack 11 supplies power used to operate the aerosol-generating device 1. For example, the battery pack 11 may supply power for heating the heater 18 or the cartridge 19 and supply power for operating the controller 12. In addition, the battery pack 11 may supply power for operating a display, a sensor, a motor, and the like installed in the aerosol-generating device 1.

The battery pack 11 may be a removable type (detachable, separate) power source. The battery pack 11 may be provided with an electrical contact, and when the battery pack 11 is mounted on the aerosol-generating device 1, the electrical contact of the battery pack 11 may be implemented to be electrically connected to the electrical contact provided in the aerosol-generating device 1 such that power is supplied to the aerosol-generating device 1.

In another example, the battery pack 11 may be provided with a charging coil, instead of a separate electrical contact, to supply power to the aerosol-generating device 1 in a wireless charging method. That is, the power supply method of the battery pack 11 may vary, and the electrical connection method between the battery pack 11 and the aerosol-generating device 1 may vary according to the power supply method supported by the battery pack 11.

The removable battery pack 11 may be provided with a charger interface that may be connected to an external charger. Power for charging the removable battery pack 11 may be supplied to the battery pack 11 through the charger interface. The battery pack 11 may be charged by an external charger while being coupled to or separated from the aerosol-generating device 1.

The controller 12 may generally control operations of the aerosol generating device 1. In detail, the controller 12 may control not only operations of the battery pack 11, the heater 18, and the cartridge 19, but also operations of other components included in the aerosol generating device 1. Also, the controller 12 may check a state of each of the components of the aerosol generating device 1 to determine whether or not the aerosol generating device 1 is able to operate.

The controller 12 may include at least one processor. A processor can be implemented as an array of a plurality of logic gates or can be implemented as a combination of a general-purpose microprocessor and a memory in which a program executable in the microprocessor is stored. The controller 12 can be implemented in other forms of hardware.

The heater 18 may be heated by the power supplied from the battery pack 11. For example, when the aerosol generating article S is inserted into the aerosol generating device 1, the heater 18 may be located outside the aerosol generating article S. Thus, the heated heater 18 may increase a temperature of an aerosol generating material in the aerosol generating article S.

The heater 18 may include an electro-resistive heater. For example, the heater 18 may include an electrically conductive track, and the heater 18 may be heated when currents flow through the electrically conductive track. However, the heater 18 is not limited to the example described above and may include all heaters which may be heated to a desired temperature. Here, the desired temperature may be pre-set in the aerosol generating device 1 or may be set by a user.

In another example, the heater 18 may include an induction heater. Particularly, the aerosol-generating device 1 may include an induction coil (not shown) surrounding the heater 18. When power is supplied to the induction coil by the battery pack 11, the induction coil may heat the heater 18. The heater 18 is a susceptor, and may be heated by a magnetic field generated by an AC current flowing through an induction coil. The magnetic field may penetrate the heater 18 and generate eddy currents in the heater 18. The current may generate heat in the heater 18.

The cigarette may include a susceptor that may be heated by an induction heater. A susceptor may be included in the cigarette, and the susceptor inside the cigarette may be heated by a magnetic field generated by an AC current flowing through the induction coil.

Although FIGS. 1 and 2 illustrate that the heater 18 is positioned outside the aerosol-generating article S, the embodiments are not limited by the position of the heater. For example, the heater 18 may include a tube-type heating element, a plate-type heating element, a needle-type heating element, or a rod-type heating element, and may heat the inside or the outside of the aerosol generating article S, according to the shape of the heating element.

Also, the aerosol generating device 1 may include a plurality of heaters 130. Here, the plurality of heaters 130 may be inserted into the aerosol generating article S or may be arranged outside the aerosol generating article S. Also, some of the plurality of heaters 130 may be inserted into the aerosol generating article S and the others may be arranged outside the aerosol generating article S. In addition, the shape of the heater 18 is not limited to the shapes illustrated in FIGS. 1 through 3 and may include various shapes.

The cartridge 19 may generate aerosol by heating a liquid composition and the generated aerosol may pass through the aerosol generating article S to be delivered to a user.

In other words, the aerosol generated by the cartridge 19 may move along the airflow passage of the aerosol-generating device 1. In FIGS. 1 and 2, aerosol moving along the airflow passage may pass through the aerosol-generating article S and be delivered to a user. In FIG. 3, the aerosol moving along the airflow passage may be delivered to the user through a mouthpiece 20.

The cartridge 19 may include a liquid storage, a liquid delivery element, and a heating element, but it is not limited thereto. For example, the liquid storage, the liquid delivery element, and the heating element may be included in the aerosol generating device 1 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the cartridge 19 or may be formed integrally with the cartridge 19.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The cartridge heater is an element for heating the liquid composition delivered by the liquid delivery element. For example, the cartridge heater may be a metal heating wire, a metal hot plate, a ceramic heater, or the like, but is not limited thereto.

In addition, the cartridge heater may include a conductive filament such as nichrome wire and may be positioned as being wound around the liquid delivery element. The cartridge heater may be heated by a current supply and may transfer heat to the liquid composition in contact with the cartridge heater, thereby heating the liquid composition. As a result, aerosol may be generated.

In another example, the cartridge heater may comprise a susceptor material that is heated by an induced magnetic field, which may be heated by an induced magnetic field generated by the induction coil arranged separately from the heating element.

In another example, the cartridge heater may be an ultrasonic vibrator that generates an aerosol from an aerosol-generating material by using ultrasonic vibration. The ultrasonic vibration method may refer to a method of generating an aerosol by atomizing the aerosol-generating material with ultrasonic vibration generated by a vibrator.

The cartridge heater may be permanently or reversibly attached to the liquid delivery element by applying, spraying, depositing, plating, immersing, painting, printing, 3D printing, using a tool, etc., as well as by bonding according to structural features such as being wound on the liquid delivery element. In addition, the cartridge heater may be arranged in the liquid transfer element by, for example, sintering the cartridge heater together with the liquid transfer element during the process of manufacturing the liquid transfer element. However, the arrangement of the cartridge heater is not limited to the examples described above, and may include various methods in which the cartridge heater may be arranged in a liquid transfer element while the function of the cartridge heater is maintained.

For example, the cartridge heater may be referred to as a cartomizer or an atomizer, but is not limited thereto.

The cartridge 19 may be inserted in and removed from the main body of the aerosol-generating device 1 or the aerosol generating device 1. When the aerosol-generating material stored in the cartridge 19 is completely consumed, the cartridge 19 may be refilled with the aerosol-generating material or be replaced with another cartridge 19 storing the aerosol-generating material.

The aerosol generating device 1 may further include general-purpose components in addition to the battery pack 11, the controller 12, the heater 18, and the cartridge 19. For example, the aerosol generating device 1 may include a display capable of outputting visual information and/or a motor for outputting haptic information. Also, the aerosol generating device 1 may include at least one sensor (a puff sensor, a temperature sensor, an aerosol generating article insertion detecting sensor, etc.). Also, the aerosol generating device 1 may be formed as a structure that, even when the aerosol generating article S is inserted into the aerosol generating device 1, may introduce external air or discharge internal air.

Although not illustrated in FIGS. 1 through 3, the aerosol generating device 1 and an additional cradle may form together a system. For example, the cradle may be used to charge the battery pack 11 of the aerosol generating device 1. Alternatively, the heater 18 may be heated when the cradle and the aerosol generating device 1 are coupled to each other.

The aerosol generating article S may be similar to a general combustive cigarette. For example, referring to Fig. 1, the aerosol generating article S may be divided into a first portion S1 including an aerosol generating material and a second portion S2 including a filter, etc. The first portion S1 may be called 'medium portion' hereinafter.

The second portion S2 of the aerosol generating article S may also include an aerosol generating material. For example, an aerosol generating material made in the form of granules or capsules may be inserted into the second portion S2.

The entire first portion S1 may be inserted into the aerosol generating device 1, and the second portion S2 may be exposed to the outside. Alternatively, only a portion of the first portion S1 may be inserted into the aerosol generating device 1, or the entire first portion S1 and a portion of the second portion S2 may be inserted into the aerosol generating device 1. The user may puff aerosol while holding the second portion S2 by the mouth of the user. In this case, the aerosol is generated by the external air passing through the first portion S1, and the generated aerosol passes through the second portion S2 and is delivered to the user's mouth.

### Mode for the Invention

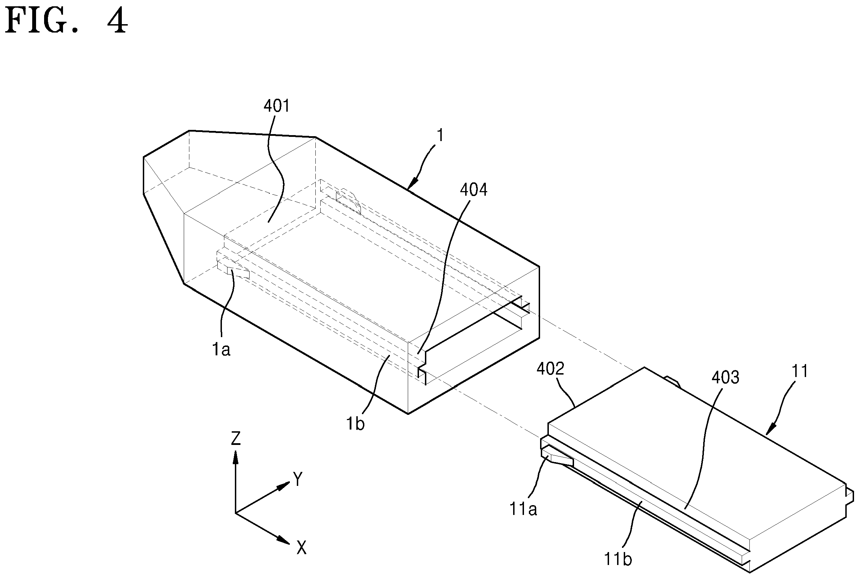

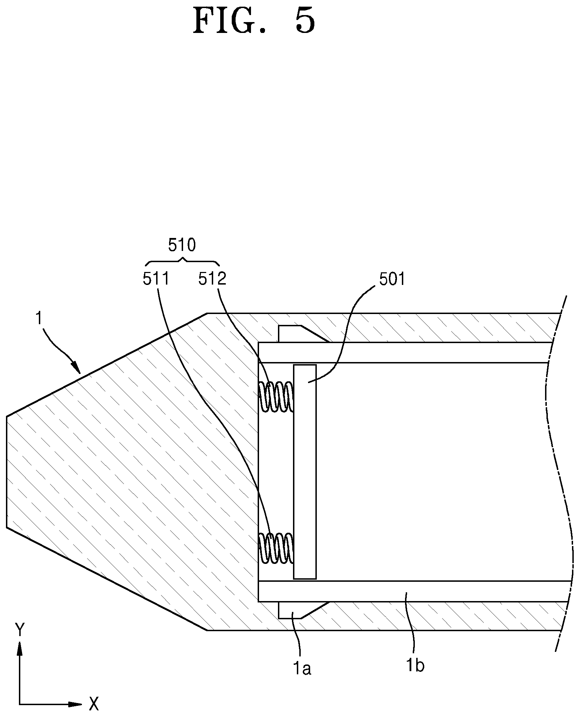

FIG. 4 is a perspective view showing components of an aerosol-generating device according to another embodiment, and FIG. 5 is a cross-sectional view of the aerosol-generating device according to the embodiment shown in FIG. 4.

An aerosol-generating device 1 according to the embodiment illustrated in FIGS. 4 and 5 includes a main body 1 in which an aerosol generator (not shown) for generating aerosol is arranged, and a battery pack 11 for supplying power to the aerosol generator (not shown).

The battery pack 11 may move linearly with respect to the main body 1 so as to be detachably coupled to the main body 1. An outer surface 403 of the battery pack 11 and an inner surface 404 of the main body 1 are in contact with each other and slide in the -X-axis direction such that the battery back may be mounted to the main body 1. When an end surface 402 of the battery pack 11 in an insertion direction and a corresponding inner wall surface 401 of the main body 1 finally come into contact, the mounting of the battery pack 11 to the main body 1 is completed.

The battery pack 11 and the main body 1 may include a hook protrusion 11a and a hook groove 1a to secure the battery pack 11 to the main body 1. The hook protrusion 11a may be arranged in either the main body 1 or the battery pack 11. The hook groove 1a that is coupled into the hook protrusion 11a may be arranged in the other one of the main body 1 and the battery pack 11. The hook protrusion 11a and the hook groove 1a may maintain the positions of the main body 1 and the battery pack 11 by being coupled to each other.

For example, the hook protrusion 11a may be arranged on the end face 402 of the battery pack 11 in the insertion direction, and the hook groove 1a may be arranged on the inner wall surface 401 of the main body 1 corresponding to the end face 402 of the battery pack 11. In another example, the hook groove 1a may be arranged on the end face 402 of the battery pack 11 in the insertion direction, and the hook protrusion 11a may be arranged on the inner wall surface 401 of the main body corresponding to the end face 402.

In another example, the hook protrusion 11a may be arranged on the outer surface 403 of the battery pack 11 with which the battery pack 11 makes sliding contact, and the hook groove 1a may be arranged on the inner surface 404 of the main body 1 corresponding to the outer surface 403 of the battery pack 11. In another example, the hook groove 1a may be arranged on the outer surface 403 of the battery pack 11 with which the battery pack 11 makes sliding contact, and the hook protrusion 11a may be arranged on the inner surface 404 of the main body corresponding to the hook groove 1a.

The hook protrusion 11a may be pressed toward the inside of the main body 1 or the battery pack 11 by an elastic member (not shown) inside the main body 1 or the battery pack 11. A user may compress an elastic member (not shown) to insert the hook protrusion 11a into the main body 1 or the battery pack 11. When the sliding movement of the battery pack 11 with respect to the main body 1 is terminated, the hook protrusion 11a may protrude toward the outside of the main body 1 or the battery pack 11 by the elasticity of the elastic member (not shown) and be coupled into the hook groove 1a of the main body 1.

The battery pack 11 and the main body 1 may include a separate slide protrusion 11b and a slide groove 1b for smooth sliding movement of the battery pack 11 with respect to the main body 1. The slide protrusion 11b may be coupled into the slide groove 1b to guide the sliding movement of the battery pack 11 with respect to the main body 1.

The slide protrusion 11b may be arranged in one of the main body 1 and the battery pack 11. The slide groove 1b that is coupled into the slide protrusion 11b may be arranged in the other one of the main body 1 and the battery pack 11. For example, the slide protrusion 11b may be arranged on the outer surface of the battery pack 11, and the slide groove 1b may be arranged on the inner wall surface of the main body corresponding to the outer surface of the battery pack 11. In another example, the slide groove 1b may be arranged on the outer surface of the battery pack 11, and the slide protrusion 11b may be arranged on the corresponding inner wall surface of the main body.

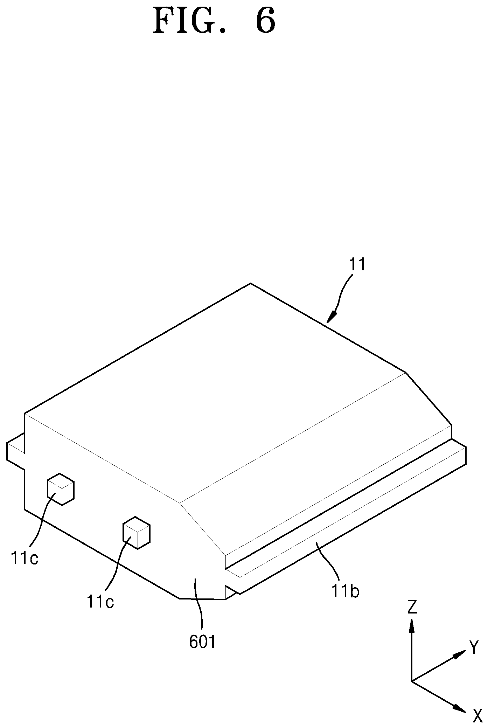

Referring to FIGS. 4 and 6, the main body 1 includes a main body terminal (not shown), and the battery pack 11 includes a battery terminal 11c. The main body terminal not shown may be electrically connected to the battery terminal 11c of the battery pack 11.

For example, the main body terminal (not shown) may be placed on one of the hook protrusion 11a and the hook groove 1a, and the battery terminal 11c may be placed on the other one of the hook protrusion 11a and the hook groove 1a. Accordingly, electrical connection between the main body terminal (not shown) and the battery terminal 11c may be made during the process of coupling the hook protrusion 11a to the hook groove 1a.

In another example, the main body terminal (not shown) may be arranged on one of the slide protrusion 11b and the slide groove 1b, and the battery terminal 11c may be arranged on the other one of the slide protrusion 11b and the slide groove 1b. Accordingly, electrical connection between the main body terminal (not shown) and the battery terminal 11c may be made during a process in which the battery pack 11 is completely mounted in a state in which the slide protrusion 11b is coupled into the slide groove 1b.

Referring to FIG. 5, the main body 1 includes a pressurization portion 501 that elastically pressurizes the battery pack 11. The pressurization portion 501 may be arranged on the inner wall surface 401 of the main body and supported by a pressure spring 510. The pressure spring 510 may include a plurality of springs, such as a first pressure spring 511 and a second pressure spring 512. As the battery pack 11 is inserted in the -X-axis direction and comes into contact with the pressurization portion 501, pressure is applied to the pressurization portion 501 such that the pressure spring 510 is compressed, thereby maintaining a stably coupled and electrically connected state between the main body 1 and the battery pack 11.

The main body terminal (not shown) may be arranged in the pressurization portion 501. As the battery pack 11 is inserted in the -X-axis direction, the main body terminal arranged in the pressurization portion 501 may be in contact with and thus be electrically connected to the battery terminal 11c arranged in the battery pack 11. The main body terminal (not shown) may maintain a stable electrical connection with the battery terminal 11c by the elastic force of the pressure spring 510.

FIG. 6 is a perspective view illustrating a battery pack according to another embodiment.

The battery pack 11 according to the embodiment illustrated in FIG. 6 includes an end face 601 of the battery pack in the insertion direction, a slide protrusion 11b for guiding the linear movement of the battery pack 11, and a battery terminal 11c electrically connected to a main body terminal (not illustrated).

The shape of the end face 601 of the battery pack 11 is asymmetrical with respect to the midpoint of two battery terminals 11c. The main body 1 includes an accommodation space for accommodating the battery pack 11 having an inlet with the same shape as an edge of the end face 601 of the battery pack in the insertion direction. Accordingly, when the battery pack 11 is inserted in the -Y-axis direction by the slide protrusion 11b, insertion of the battery terminal 11c in the opposite direction may be prevented. For example, when the battery pack 11 is inserted in the -Y-axis direction by the slide protrusion 11b, the battery pack 11 may be prevented from being mounted in the main body in a state in which the battery pack 11 is rotated by 180 degrees with respect to the Y-axis.

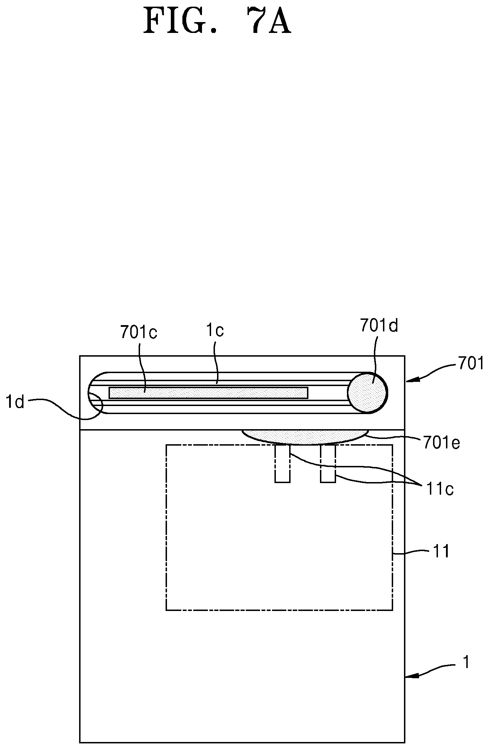

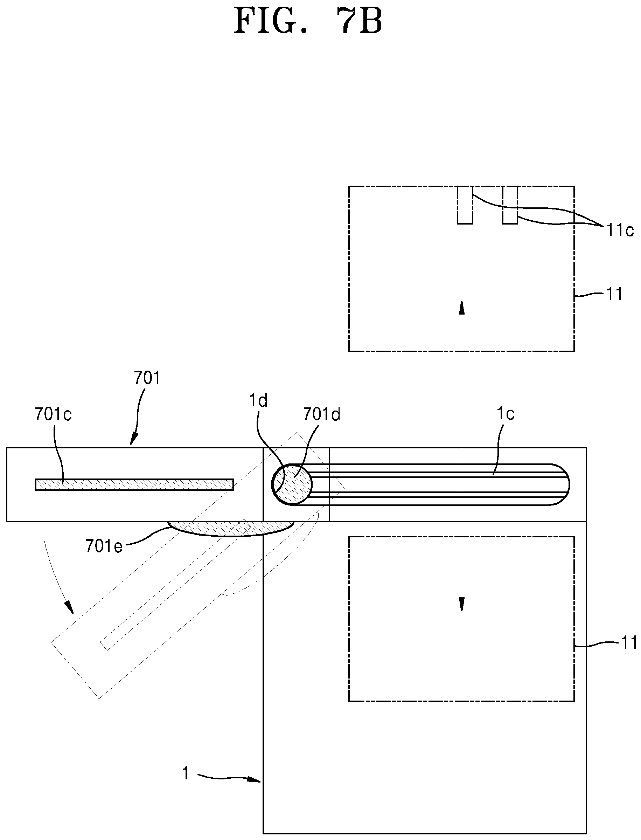

FIGS. 7A and 7B are conceptual diagrams sequentially showing a process of opening a battery cover of an aerosol-generating device according to another embodiment.

The aerosol-generating device 1 of FIGS. 7A and 7B includes a battery cover 701 covering the battery pack 11 and a cover slide groove 1c that guides the sliding movement of the battery cover 701 with respect to the main body 1. The cover slide groove 1c includes a cover rotation groove 1d which is a center of rotation of the battery cover 701 with respect to the main body 1.

The battery cover 701 includes a cover slide protrusion 701c that is coupled into the cover slide groove 1c, a cover rotation protrusion 701d that is coupled into the cover rotation groove 1d, and a cover protrusion 701e that presses the battery pack 11 in the insertion direction while being in contact with an end face of the battery pack 11.

The configuration of the embodiment illustrated in FIGS. 7A and 7B may be modified. For example, the cover slide groove 1c and the cover rotation groove 1d may be arranged in the battery cover 701, and the cover slide protrusion 701c and the cover rotation protrusion 701d may be arranged in the main body 1.

Referring to FIG. 7A, the as the cover protrusion 701e supports the battery pack 11, the battery cover 701 may be closed.

Referring to FIG. 7b, the battery cover 701 may move linearly with respect to the main body 1 as the cover slide protrusion 701c slides along the cover slide groove 1c. The battery cover 701 may slidingly move until the accommodation space for accommodating the battery pack 11 inside the main body 1 is completely opened. When the space for accommodating the battery pack 11 is completely opened, the battery pack 11 may be separated from the main body 1 to the outside.

The cover slide groove 1c of the main body 1 may extend in the same direction as the movement direction of the battery cover 701. The cover rotation protrusion 701d slides linearly along the cover slide groove 1c. Therefore, the cover rotation protrusion 701d and the cover slide groove 1c may perform a function of guiding the sliding movement of the battery cover 701.

As the accommodation space for accommodating the battery pack 11 is completely opened by the sliding movement of the battery cover 701, the cover rotation protrusion 701d reaches the end of the cover slide groove 1c. When the accommodation space for accommodating the battery pack 11 is completely open, the cover rotation protrusion 701d may come into contact with the end of the cover slide groove 1c such that the battery cover 701 is prevented from being completely separated from the main body 1. When the accommodation space for accommodating the battery pack 11 is completely open, the cover slide protrusion 701c may be separated from the cover slide groove 1c.

The battery cover 701 may rotate around the cover rotation groove 1d after the accommodation space for accommodating the battery pack 11 is completely opened. The cover rotation protrusion 701d of the battery cover 701 is restrained by the cover rotation groove 1d. Accordingly, the cover rotation protrusion 701d of the battery cover 701 rotates around the cover rotation groove 1d, thereby enabling stable rotational movement of the battery cover 701 and allowing the open state of the battery cover 701 to be stably maintained.

The battery cover 701 may include a cover terminal (not shown), and the battery pack 11 may include the battery terminal 11c electrically connected to the cover terminal (not shown).

The cover terminal (not shown) may be arranged on the outer surface of the battery cover 701 that is in contact with the cover protrusion 701e or the battery pack 11, and the battery terminal 11c may be placed on the end face of the battery pack 11 in the insertion direction of the battery pack 11. As the battery cover 701 is closed, the cover terminal (not shown) located on the cover protrusion 701e presses and contacts the battery terminal 11c, thereby maintaining a stable electrical connection state.

The battery cover 701 may include a main body pressurization portion (not shown) that elastically presses the battery pack 11. The main body pressurization portion (not shown) may be arranged on one side of the battery cover 701 that is in contact with the battery pack 11, and may press the battery pack 11 by elastic force, thereby maintaining a stable electrical connection state between the cover terminal (not shown) and the battery terminal 11c.

Structural stability during opening may be greater when the accommodation space accommodating the battery pack 11 inside the main body 1 is opened by the sliding movement and rotation of the battery cover 701 than when opened by only the sliding movement of the battery cover 701. That is, by adding a degree of freedom rotation of the battery cover 701, stability against external force or impact at the end of the battery cover 701 during an open state of the battery cover 701 may be secured.

Structural stability during closing may be greater when the accommodation space accommodating the battery pack 11 inside the main body 1 is opened by the sliding movement and rotation of the battery cover 701 than when opened by only the rotation of the battery cover 701. That is, the battery cover 701 may be prevented from being opened in a situation where the user does not intend to open the accommodation space that accommodates the battery pack 11 inside the main body 1.

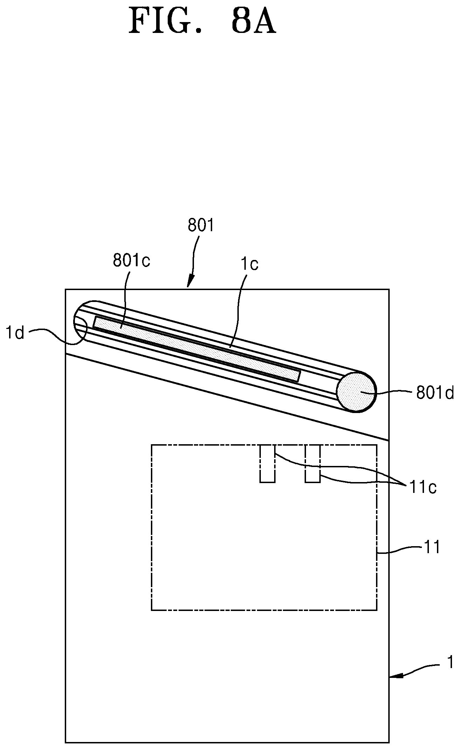

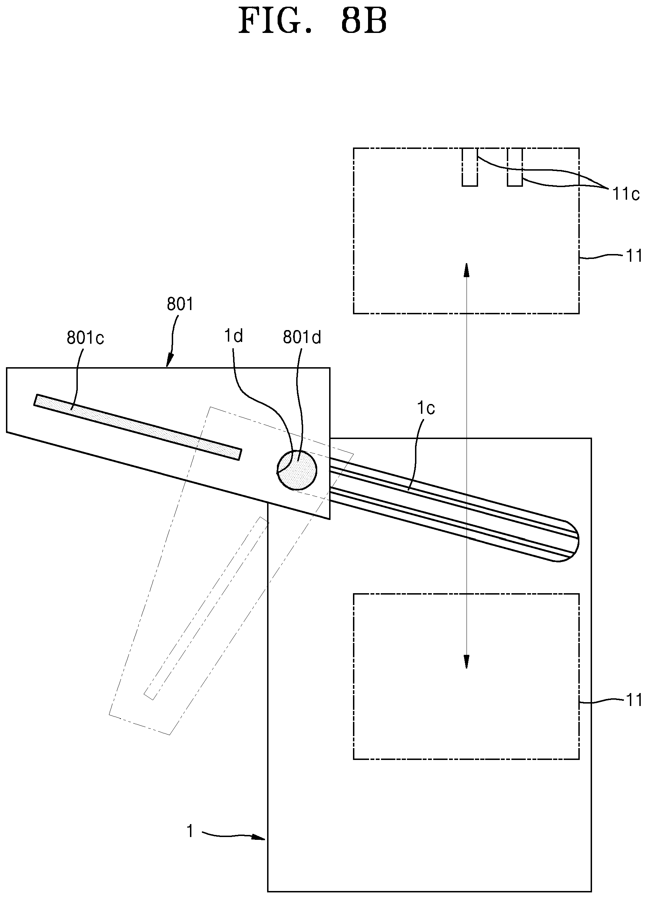

FIGS. 8A and 8B are conceptual diagrams sequentially showing a process of opening a battery cover of an aerosol-generating device according to another embodiment.

The opening process of the battery cover 801 illustrated in FIGS. 8A and 8B may be the same as or similar to the opening process of the battery cover 701 illustrated in FIGS. 7A and 7B, and any duplicate description is omitted below.

The aerosol-generating device 1 of FIGS. 8A and 8B includes a battery cover 801 covering the battery pack 11 and a cover slide groove 1c that guides the sliding movement of the battery cover 801 with respect to the main body 1. The cover slide groove 1c includes a cover rotation groove 1d which is a center of rotation of the battery cover 801 with respect to the main body 1.

The battery cover 801 includes a cover slide protrusion 801c that is coupled into the cover slide groove 1c and a cover rotation protrusion 801d that is coupled into the cover rotation groove 1d.

The configuration of the embodiment illustrated in FIGS. 8A and 8B may be modified. For example, the cover slide groove 1c and the cover rotation groove 1d may be arranged in the battery cover 801, and the cover slide protrusion 801c and the cover rotation protrusion 801d may be arranged in the main body 1.

Referring to FIG. 8A, since the lower surface of the battery cover 801 is inclined with respect to the insertion direction of the battery pack 11, the battery cover 801 may support the battery pack 11 and maintain the closed state of the battery cover 801. That is, since the lower surface of the battery cover 801 is inclined, a portion corresponding to the thickest portion of the lower surface of the battery cover 801 may support the battery pack 11 by being in contact with the battery pack 11.

Referring to FIG. 8B, the cover slide groove 1c of the main body 1 may extend in a direction crossing the direction in which the battery pack 11 is inserted. The battery cover 801 may perform a linear sliding movement by sliding the cover rotation protrusion 801d along the cover slide groove 1c.

When the battery cover 801 moves linearly to open the accommodation space for the battery pack 11, pressure from the lower surface of the battery cover 801 pressing the battery pack 11 against the inside of the main body 1 is released. When the battery cover 801 completely opens the accommodation space for the battery pack 11, the battery pack 11 may be separated from the main body 1.

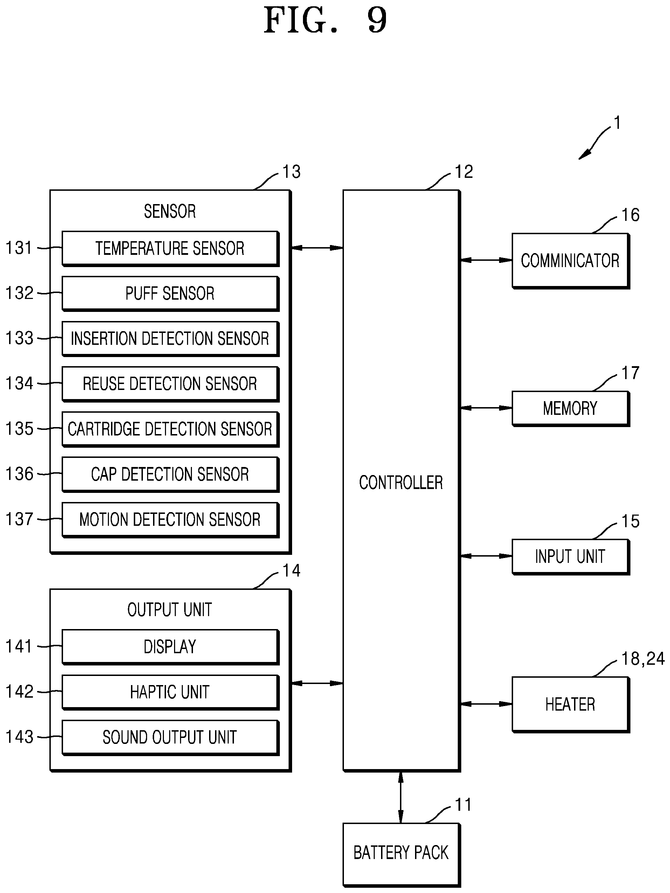

FIG. 9 is a block diagram of an aerosol-generating device according to the embodiments illustrated in FIGS. 1 to 8B.

The aerosol generating device 1 may include a battery pack 11, a controller 12, a sensor 13, an output unit 14, an input unit 15, a communicator 16, a memory 17, and at least one heater 18, 24. However, an internal structure of the aerosol generating device 1 is not limited to that illustrated in FIG. 9. In other words, according to the design of the aerosol generating device 1, one of ordinary skill in the art related to the present embodiment that some of the components shown in FIG. 9 may be omitted or new components may be added.

The sensor 13 may detect a state of the aerosol generating device 1 or a state around the aerosol generating device 1 and transmit detected information to the controller 12. On the basis of the detected information, the controller 12 may control the aerosol generating device 1 to perform various functions such as control of operations of the cartridge heater 24 and/or the heater 18, a restriction on smoking, determination of whether or not the stick S and/or the cartridge 19 are inserted, and a notification display.

The sensor 13 may include at least one of a temperature sensor 131, a puff sensor 132, an insertion detection sensor 133, a reuse detection sensor 134, a cartridge detection sensor 135, a cap detection sensor 136, and a motion detection sensor 137.

The temperature sensor 131 may detect a temperature at which the cartridge heater 24 and/or the heater 18 are heated. The aerosol generating device 1 may include a separate temperature sensor for detecting the temperatures of the cartridge heater 24 and/or the heater 18, or the cartridge heater 24 and/or the heater 18 may operate as temperature sensors.

The temperature sensor 131 may output a signal corresponding to the temperature of the cartridge heater 24 and/or the heater 18. For example, the temperature sensor 131 may include a resistor element whose resistance value changes in correspondence to a change in the temperature of the cartridge heater 24 and/or the heater 18. The temperature sensor 131 may be implemented by a thermistor or the like, which is an element using a property of changing resistance according to temperature. Here, the temperature sensor 131 may output a signal corresponding to the resistance value of the resistor element as a signal corresponding to the temperature of the cartridge heater 24 and/or the heater 18. For example, the temperature sensor 131 may include a sensor that detects a resistance value of the cartridge heater 24 and/or the heater 18. Here, the temperature sensor 131 may output a signal corresponding to the resistance value of the cartridge heater 24 and/or the heater 18 as a signal corresponding to the temperature of the cartridge heater 24 and/or the heater 18.

The temperature sensor 131 may be arranged around the battery pack 11 to monitor a temperature of the battery pack 11. The temperature sensor 131 may be arranged adjacent to the battery pack 11. For example, the temperature sensor 131 may be attached to one surface of a battery that is the battery pack 11. For example, the temperature sensor 131 may be mounted on one surface of a PCB.

The temperature sensor 131 may be arranged inside the body to detect an internal temperature of the body.

The puff sensor 132 may detect a puff by a user on the basis of various physical changes in an air flow path. The puff sensor 132 may output a signal corresponding to the puff. For example, the puff sensor 132 may be a pressure sensor. The puff sensor 132 may output a signal corresponding to internal pressure of the aerosol generating device 1. Here, the internal pressure of the aerosol generating device 1 may correspond to pressure of the air flow path through which a gas flows. The puff sensor 132 may be arranged in correspondence to the air flow path through which the gas flows in the aerosol generating device 1.

The insertion detection sensor 133 may detect insertion and/or removal of the stick S. The insertion detection sensor 133 may detect a signal change due to the insertion and/or removal of the stick S. The insertion detection sensor 133 may be installed around an insertion space. The insertion detection sensor 133 may detect the insertion and/or removal of the stick S according to a change in a dielectric constant inside the insertion space. For example, the insertion detection sensor 133 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick S including a metal wrapper is inserted into the insertion space, the electromagnetic characteristic around the conductor may be changed by the wrapper of the stick S.

The reuse detection sensor 134 may detect whether or not the stick S is reused. The reuse detection sensor 134 may be a color sensor. The color sensor may detect a color of the stick S. The color sensor may detect a color of a portion of the wrapper wrapping the outside of the stick S. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick S may have a color changing by an aerosol. When the stick S is inserted into the insertion space, the reuse detection sensor 134 may be arranged in correspondence to a location at which at least the portion of the wrapper whose color changes by the aerosol is arranged. For example, before the stick S is used by the user, the color of at least the portion of the wrapper may be a first color. Here, when at least the portion of the wrapper is wetted by the aerosol while the aerosol generated by the aerosol generating device 1 passes through the stick S, the color of at least the portion of the wrapper may be changed to a second color. The color of at least the portion of the wrapper may be maintained in the second color after changing from the first color to the second color.

The cartridge detection sensor 135 may detect mounting and/or removal of the cartridge 19. The cartridge detection sensor 135 may be implemented by an inductance-based sensor, a capacitive sensor, a resistance sensor, a hall sensor (a hall IC) using a hall effect, or the like.

The cap detection sensor 136 may detect mounting and/or removal of a cap. When the cap is detached from the body, a portion of the cartridge 19 and the body covered by the cap may be exposed to the outside. The cap detection sensor 136 may be implemented by a contact sensor, a hall sensor (a hall IC), an optical sensor, or the like.

The motion detection sensor 137 may detect a motion of the aerosol generating device 1. The motion detection sensor 137 may be implemented as at least one of an acceleration sensor and a gyro sensor.

In addition to the sensors 131 to 137 described above, the sensor 13 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 14 may output information regarding the state of the aerosol generating device 1 and provide the information to the user. The output unit 14 may include at least one of a display 141, a haptic unit 142, and a sound output unit 143, but is not limited thereto. When the display 141 and a touch pad form a layer structure to form a touch screen, the display 141 may be used as an input device in addition to an output device.

The display 141 may visually provide the user with information regarding the aerosol generating device 1. For example, the information regarding the aerosol generating device 1 may refer to various types of information such as a charging/discharging state of the battery pack 11 of the aerosol-generating device 1, a preheating state of the heater 18, the insertion/removal state of the stick S and/or the cartridge 19, the mounting/removal state of the cap, and the restriction on use of the aerosol generating device 1 (e.g., detection of an abnormal article), and the display 141 may output the information to the outside. For example, the display 141 may be in the form of a light emitting diode (LED) light emitting device. For example, the display 141 may be a liquid crystal display (LCD) panel, an organic light emitting display (OLED) panel, or the like.

The haptic unit 142 may tactilely provide the user with the information regarding the aerosol generating device 1 by converting an electrical signal into a mechanical stimulus or an electrical stimulus. For example, when initial power is supplied to the cartridge heater 24 and/or the heater 18 for a set time, the haptic unit 142 may generate vibration corresponding to completion of initial preheating. The haptic unit 142 may include a vibration motor, a piezoelectric element, or an electrical stimulation device.

The sound output unit 143 may audibly provide the user with the information regarding the aerosol generating device 1. For example, the sound output unit 143 may convert the electrical signal into a sound signal and output the sound signal to the outside.

The battery pack 11 may supply power used to operate the aerosol generating device 1. The battery pack 11 may supply power so that the cartridge heater 24 and/or the heater 18 may be heated. In addition, the battery pack 11 may supply power needed for operations of the sensor 13, the output unit 14, the input unit 15, the communicator 16, and the memory 17, which are other components provided within the aerosol generating device 1. The battery pack 11 may be a rechargeable battery or a disposable battery. For example, the battery pack 11 may be a lithium polymer (LiPoly) battery, but is not limited thereto.

Although not shown in FIG. 9, the aerosol generating device 1 may further include a power protection circuit. The power protection circuit may be electrically connected to the battery pack 11 and may include a switching element.

The power protection circuit may cut off an electrical path for the battery pack 11 according to a certain condition. For example, the power protection circuit may cut off the electrical path for the battery pack 11 when a voltage level of the battery pack 11 is a first voltage or more corresponding to overcharging. For example, the power protection circuit may cut off the electrical path for the battery pack 11 when the voltage level of the battery pack 11 is less than a second voltage corresponding to overdischarge.

The heater 18 may be supplied with power from the battery pack 11 and heat a medium or an aerosol generating material within the stick S. Although not shown in FIG. 9, the aerosol generating device 1 may further include a power conversion circuit (e.g., a DC/DC converter) that converts power of the battery pack 11 and supplies the converted power to the cartridge heater 24 and/or the heater 18. In addition, when the aerosol generating device 1 generates an aerosol by an induction heating method, the aerosol generating device 1 may further include a DC/AC converter that converts DC power of the battery pack 11 into AC power.

The controller 12, the sensor 13, the output unit 14, the input unit 15, the communicator 16, and the memory 17 may be supplied with power from the battery pack 11 to perform functions. Although not shown in FIG. 9, the aerosol generating device 1 may further include a power conversion circuit that converts power of the battery pack 11 and supplies the power to each of components, e.g., a low-dropout (LDO) circuit or a voltage regulator circuit. Also, although not shown in FIG. 9, a noise filter may be provided between the battery pack 11 and the heater 18, 24. The noise filter may be a low pass filter. The low pass filter may include at least one inductor and a capacitor. A cutoff frequency of the low pass filter may correspond to a frequency of a high-frequency switching current applied from the battery pack 11 to the heater 18, 24. The low pass filter may prevent a high-frequency noise component from being applied to the sensor 13, such as the insertion detection sensor 133.

In an embodiment, the cartridge heater 24 and/or the heater 18 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the heater 18 may be implemented by a metal wire, a metal plate on which an electrically conductive track is arranged, or a ceramic heating element, but is not limited thereto.

In an embodiment, the heater 18 may include an induction heater. For example, the heater 18 may include a susceptor that generates heat through a magnetic field applied by a coil to heat an aerosol generating material.

The input unit 15 may receive information input from the user or output the information to the user. For example, the input unit 15 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 141 and the touch panel may be implemented as one panel. For example, the touch panel may be inserted into the display 141 (e.g., may be a on-cell type or in-cell type). For example, the touch panel may be added on the display 141 (e.g., may be an add-on type).

Meanwhile, the input unit 15 may include a button, a keypad, a dome switch, a jog wheel, a jog switch, or the like, but is not limited thereto.

The memory 17 may be hardware for storing various types of data processed within the aerosol generating device 1 and may store pieces of data processed by the controller 12 and pieces of data to be processed by the controller 12. The memory 17 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 17 may store data or the like regarding an operation time of the aerosol generating device 1, the maximum number of puffs, the current number of puffs, at least one temperature profile, and a smoking pattern of the user.

The communicator 16 may include at least one component for communication with another electronic device. For example, the communicator 16 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 9, the aerosol generating device 1 may further include a connection interface such as a universal serial bus (USB) interface, and may connect with another external device through the connection interface such as a USB interface to transmit and receive information or charge the power 11.

The controller 12 may control an overall operation of the aerosol generating device 1. In an embodiment, the controller 12 may include at least one processor. The processor may be implemented as an array of a plurality of logic gates or may be implemented as a combination of a general-purpose microprocessor and a memory that stores a program executable by the microprocessor. In addition, the processor may be implemented as other types of hardware.

The controller 12 may control the temperature of the heater 18 by controlling supply power from the battery pack 11 to the heater 18, 24. The controller 12 may control the temperature of the cartridge heater 24 and/or the heater 18 on the basis of the temperature of the cartridge heater 24 and/or the heater 18 sensed by the temperature sensor 131. The controller 12 may adjust power supplied to the cartridge heater 24 and/or the heater 18, on the basis of the temperature of the cartridge heater 24 and/or the heater 18. For example, the controller 12 may determine a target temperature for the cartridge heater 24 and/or the heater 18, on the basis of a temperature profile stored in the memory 17.

The aerosol generating device 1 may include a power supply circuit (not shown) electrically connected to the battery pack 11 between the battery pack 11 and the cartridge heater 24 and/or the heater 18. The power supply circuit may be electrically connected to the cartridge heater 24, the heater 18, or an induction coil 181. The power supply circuit may include at least one switching element. The switching element may be implemented by a bipolar junction transistor (BJT), a field effective transistor (FET), or the like. The controller 12 may control the power supply circuit.

The controller 12 may control power supply by controlling switching of the switching element of the power supply circuit. The power supply circuit may be an inverter that converts DC power output from the battery pack 11 into AC power. For example, the inverter may include a full-bridge circuit or a half-bridge circuit including a plurality of switching elements.

The controller 12 may turn on the switching element so that power is supplied from the battery pack 11 to the cartridge heater 24 and/or the heater 18. The controller 12 may turn off the switching element to cut off the supply of power to the cartridge heater 24 and/or the heater 18. The controller 12 may adjust a current supplied from the battery pack 11 by adjusting a frequency and/or duty ratio of a current pulse input into the switching element.

The controller 12 may control a voltage output from the battery pack 11 by controlling switching of the switching element of the power supply circuit. The power conversion circuit may convert the voltage output from the battery pack 11. For example, the power conversion circuit may include a buck-converter that steps down the voltage output from the battery pack 11. For example, the power conversion circuit may be implemented through a buck-boost converter, a zener diode, or the like.

The controller 12 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the battery pack 11. The duty ratio for the on/off operation of the switching element may correspond to a ratio of the voltage output from the power conversion circuit to the voltage output from the battery pack 11. The level of the voltage output from the power conversion circuit may decrease with a decrease in the duty ratio for the on/off operation of the switching element. The heater 18 may be heated on the basis of the voltage output from the power conversion circuit.

The controller 12 may control power to be supplied to the heater 18 by using at least one of a pulse width modulation (PWM) method and a proportional-integral-differential (PID) method.

For example, the controller 12 may control a current pulse having a certain frequency and duty ratio to be supplied to the heater 18 by using the PWM method. The controller 12 may control the power supplied to the heater 18 by adjusting the frequency and duty ratio of the current pulse.

For example, the controller 12 may determine a target temperature to be controlled, on the basis of the temperature profile. The controller 12 may control the power supplied to the heater 18 by using the PID method, which is a feedback control method through a difference value between the temperature of the heater 18 and the target temperature, a value obtained by integrating the difference value over time, and a value obtained by differentiating the difference value over time.

The controller 12 may prevent the cartridge heater 24 and/or the heater 18 from overheating. For example, on the basis that the temperature of the cartridge heater 24 and/or the heater 18 exceeds a preset limit temperature, the controller 12 may control an operation of the power conversion circuit so that the supply of power to the cartridge heater 24 and/or the heater 18 stops. For example, on the basis that the temperature of the cartridge heater 24 and/or the heater 18 exceeds the preset limit temperature, the controller 12 may reduce an amount of power supplied to the cartridge heater 24 and/or the heater 18 by a certain ratio. For example, on the basis that the temperature of the cartridge heater 24 exceeds the preset limit temperature, the controller 12 may determine that the aerosol generating material accommodated in the cartridge 19 is exhausted and cut off the power supply to the cartridge heater 24.

The controller 12 may control charging and discharging of the battery pack 11. The controller 12 may identify the temperature of the battery pack 11 on the basis of an output signal of the temperature sensor 131.

When a power line is connected to a battery terminal of the aerosol generating device 1, the controller 12 may identify whether or not the temperature of the battery pack 11 is a first limit temperature or more which is a reference for blocking charging of the battery pack 11. When the temperature of the battery pack 11 is less than the first limit temperature, the controller 12 may control the battery pack 11 to be charged, on the basis of a preset charging current. The controller 12 may block charging of the battery pack 11 when the temperature of the battery pack 11 is the first limit temperature or more.

While the power of the aerosol generating device 1 is turned on, the controller 12 may identify whether or not the temperature of the battery pack 11 is a second limit temperature or more which is a reference for blocking discharge of the battery pack 11. The controller 12 may control power stored in the battery pack 11 to be used when the temperature of the battery pack 11 is less than the second limit temperature. When the temperature of the battery pack 11 is the second limit temperature or more, the controller 12 may stop using the power stored in the battery pack 11.

The controller 12 may calculate a remaining capacity of the power stored in the battery pack 11. For example, the controller 12 may calculate the remaining capacity of the battery pack 11 on the basis of a voltage and/or current sensing value of the battery pack 11.

The controller 12 may determine, through the insertion detection sensor 133, whether or not the stick S is inserted into the insertion space. The controller 12 may determine that the stick S is inserted, on the basis of the output signal of the insertion detection sensor 133. When determining that the stick S is inserted into the insertion space, the controller 12 may control power to be supplied to the cartridge heater 24 and/or the heater 18. For example, the controller 12 may supply power to the cartridge heater 24 and/or the heater 18, on the basis of the temperature profile stored in the memory 17.

The controller 12 may determine whether or not the stick S is removed from the insertion space. For example, the controller 12 may determine, through the insertion detection sensor 133, whether or not the stick S is removed from the insertion space. For example, when the temperature of the heater 18 is the preset limit temperature or more or when a temperature change gradient of the heater 18 is a set gradient, the controller 12 may determine that the stick S is removed from the insertion space. When determining that the stick S is removed from the insertion space, the controller 12 may cut off the supply of power to the cartridge heater 24 and/or the heater 18.

The controller 12 may control a power supply time and/or a power supply amount with respect to the heater 18, according to a state of the stick S detected by the sensor 13. The controller 12 may identify, on the basis of a look-up table, a level range including a level of a signal of the capacitance sensor. The controller 12 may determine an amount of moisture in the stick S, according to the identified level range.

When the stick S is over-humidified, the controller 12 may increase a preheating time of the stick S compared to a normal state by controlling the power supply time with respect to the heater 18.

The controller 12 may determine, through the reuse detection sensor 134, whether or not the stick S inserted into the insertion space is reused. For example, the controller 12 may compare a sensing value of a signal of the reuse detection sensor 134 with a first reference range including a first color and when the sensing value is included in the first reference range, determine that the stick S is not used. For example, the controller 12 may compare the sensing value of the signal of the reuse detection sensor 134 with a second reference range including a second color and when the sensing value is included in the second reference range, determine that the stick S is used. When determining that the stick S is used, the controller 12 may cut off the supply of power to the cartridge heater 24 and/or the heater 18.

The controller 12 may determine, through the cartridge detection sensor 135, whether or not the cartridge 19 is coupled and/or removed. For example, the controller 12 may determine whether or not the cartridge 19 is coupled or removed, on the basis of a sensing value of the signal of the cartridge detection sensor 135.

The controller 12 may determine whether or not the aerosol generating material of the cartridge 19 is exhausted. For example, the controller 12 may apply power to preheat the cartridge heater 24 and/or the heater 18, determine whether or not the temperature of the cartridge heater 24 exceeds the limit temperature in a preheating period, and when the temperature of the cartridge heater 24 exceeds the limit temperature, determine that the aerosol generating material of the cartridge 19 is exhausted. When determining that the aerosol generating material of the cartridge 19 is exhausted, the controller 12 may cut off the supply of power to the cartridge heater 24 and/or the heater 18.

The controller 12 may determine whether or not the cartridge 19 may be usable. When the current number of puffs is greater than or equal to the maximum number of puffs set in the cartridge 19, the controller 12 may determine, on the basis of data stored in the memory 17, that the cartridge 19 may not be usable. For example, when the total time for which the heater 24 is heated is a preset maximum time or more or the total amount of power supplied to the heater 24 is a preset maximum amount of power or more, the controller 12 may determine that the cartridge 19 may not be usable.

The controller 12 may determine inhalation by the user through the puff sensor 132. For example, the controller 12 may determine whether or not a puff occurs, on the basis of a sensing value of a signal of the puff sensor 132. For example, the controller 12 may determine an intensity of the puff, on the basis of the sensing value of the signal of the puff sensor 132. When the number of puffs reaches the preset maximum number of puffs or when puffs are not detected for a preset time or more, the controller 12 may cut off the supply of power to the cartridge heater 24 and/or the heater 18.

The controller 12 may determine, through the cap detection sensor 136, whether a cap is coupled and/or removed. For example, the controller 12 may determine whether or not the cap is coupled and/or removed, on the basis of a sensing value of a signal of the cap detection sensor 136.

The controller 12 may control the output unit 14 on the basis of the result of detection by the sensor 13. For example, when the number of puffs counted through the puff sensor 132 reaches a preset number, the controller 12 may notify the user that the aerosol generating device 1 is soon terminated, through at least one of the display 141, the haptic unit 142, and the sound output unit 143. For example, the controller 12 may notify the user through the output unit 14 that the stick S is not present in the insertion space, on the basis of the determination that the stick S is not present in the insertion space. For example, the controller 12 may notify the user through the output unit 14 that the cartridge 19 and/or the cap are not mounted, on the basis of the determination that the cartridge 19 and/or the cap are not mounted. For example, the controller 12 may transmit information regarding the temperature of the cartridge heater 24 and/or the heater 18 to the user through the output unit 14.

The controller 12 may store and update, in the memory 17, a history of a certain event that occurs, on the basis of the occurrence of the event. The event may include detection of insertion of the stick S, initiation of heating of the stick S, detection of puffs, termination of the puffs, detection of overheating of the cartridge heater 24 and/or the heater 18, detection of application of an overvoltage to the cartridge heater 24 and/or the heater 18, termination of heating of the stick S, an operation such as power on/off of the aerosol generating device 1, initiation of charging of the battery pack 11, detection of overcharging of the battery pack 11, termination of charging of the battery pack 11, and the like. The history of the event may include a date and time when the event occurs, log data corresponding to the event, and the like. For example, when the certain event is the detection of insertion of the stick S, the log data corresponding to the event may include data regarding the sensing value of the insertion detection sensor 133 and the like. For example, when the certain event is the detection of overheating of the cartridge heater 24 and/or the heater 18, the log data corresponding to the event may include data regarding the temperature of the cartridge heater 24 and/or the heater 18, the voltage applied to the cartridge heater 24 and/or the heater 18, a current flowing through the cartridge heater 24 and/or the heater 18, and the like.

The controller 12 may control to form a communication link with an external device such as a mobile terminal of the user. When data regarding authentication is received from the external device through the communication link, the controller 12 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 12 may release the restriction on the use of at least one function of the aerosol generating device 1. For example, when the user authentication is completed, the controller 12 may release a restriction on use of a heating function of supplying power to the heater 18, 24.

The controller 12 may transmit data regarding the state of the aerosol generating device 1 to the external device through the communication link formed with the external device. On the basis of the received data regarding the state of the aerosol generating device 1, the external device may output the remaining capacity of the battery pack 11 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 12 may control at least one of output devices to perform an operation corresponding to the location search, on the basis of the received location search request. For example, the haptic unit 142 may generate vibration in response to the location search request. For example, the display 141 may output an object corresponding to the location search and an end of the search in response to the location search request.

When receiving firmware data from the external device, the controller 12 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 12 may control the firmware update of the aerosol generating device 1 to be performed.

The controller 12 may transmit data regarding a sensing value of at least one sensor 13 to the external server (not shown) through the communicator 16, and receive from the server and store a learning model generated by learning the sensing value through machine learning such as deep learning. The controller 12 may perform an operation of determining an inhalation pattern of the user, an operation of generating a temperature profile, and the like by using the learning model received from the server. The controller 12 may store, in the memory 17, sensing value data of at least one sensor 13, data for training an artificial neural network (ANN), and the like. For example, the memory 17 may store a database for each component provided in the aerosol generating device 1, which is for training the ANN, and weights and biases constituting the structure of the ANN. The controller 12 may generate at least one learning model used for determining the inhalation pattern of the user, generating the temperature profile, and the like, by learning data regarding the sensing value of the at least one sensor 13, the inhalation pattern of the user, the temperature profile, and the like which are stored in the memory 17.

Some embodiments or other embodiments of the disclosure described above are not exclusive or distinct from each other. In some embodiments or other embodiments of the disclosure described above, respective components or functions may be used in combination with one another or combined with one another.

For example, a component A described in a particular embodiment and/or drawing and a component B described in another embodiment and/or drawing may be combined with each other. In other words, even when coupling between components is not directly described, the coupling may be made except when the coupling is described as impossible.

The above description should not be construed as being limited in all respects but should be considered illustrative. The scope of the disclosure should be determined by the logical interpretation of appended claims, and all changes within the equivalent scope of the disclosure are included in the scope of the disclosure.

### Industrial Applicability

Embodiments relate to an aerosol-generating device to which a battery is detachably coupled.

## Claims

1. An aerosol-generating device comprising:
an aerosol generator configured to generate an aerosol;
a main body in which the aerosol generator is arranged; and
a battery pack comprising a battery configured to supply power to the aerosol generator and a battery case accommodating the battery, wherein
one of the main body and the battery pack comprises a hook protrusion maintaining a position of the battery pack with respect to the main body,
the other one of the main body and the battery pack comprises a hook groove into which the hook protrusion is coupled, and
the battery pack is detachably coupled to the main body by a sliding movement with respect to the main body.

2. The aerosol-generating device of claim 1, wherein one of the hook protrusion and the hook groove is arranged on an end face of the battery pack in an insertion direction of the battery pack, and
the other one of the hook protrusion and the hook groove is arranged on an inner wall surface of the main body corresponding to the end face of the battery pack.

3. The aerosol-generating device of claim 1, wherein one of the main body and the battery pack further comprises a slide protrusion to guide the sliding movement of the battery pack with respect to the main body, and
the other one of the main body and the battery pack further comprises a slide groove into which the slide protrusion is coupled.

4. The aerosol-generating device of claim 3, wherein one of the hook protrusion and the hook groove is arranged on a surface of the main body or the battery pack on which the slide protrusion is arranged, and
the other one of the hook protrusion and the hook groove is arranged on a surface of the main body or the battery pack in which the slide groove is arranged.

5. The aerosol-generating device of claim 3, wherein the main body further comprises a main body terminal,
the battery pack further comprises a battery terminal configured to be electrically connected to the main body terminal,
the main body terminal is arranged in one of the slide protrusion and the slide groove, and
the battery terminal is arranged in the other one of the slide protrusion and the slide groove.

6. The aerosol-generating device of claim 1, wherein the main body further comprises a main body terminal, the battery pack further comprises a battery terminal configured to be electrically connected to the main body terminal,
the main body terminal is arranged in one of the hook protrusion and the hook groove, and
the battery terminal is arranged in the other one of the hook protrusion and the hook groove.

7. The aerosol-generating device of claim 1, wherein a shape of a cross-section of the battery pack in a direction crossing an insertion direction of the battery pack is asymmetrical.

8. The aerosol-generating device of claim 1, wherein the main body further comprises an accommodation space accommodating the battery pack and a battery cover coupled to the main body such that the battery pack is covered,
one of the battery cover and the main body comprises a cover slide protrusion to guide a sliding movement of the battery cover with respect to the main body,
the other one of the battery cover and the main body further comprises a cover slide groove to which the cover slide protrusion is coupled, and
the battery cover opens the accommodation space by a sliding movement with respect to the main body.

9. The aerosol-generating device of claim 8, wherein one of the battery cover and the main body comprising the cover slide protrusion further comprises a cover rotation protrusion arranged on an end of the cover slide protrusion,
the cover slide groove comprises a cover rotation groove to which the cover rotation protrusion is coupled, and
the battery cover is configured to slidingly move with respect to the main body and then rotate around the cover rotation protrusion to open the accommodation space.

10. The aerosol-generating device of claim 8, wherein the cover slide groove extends in a direction crossing an insertion direction of the battery pack.

11. The aerosol generating device of claim 8, wherein the main body further comprises a main body pressurization portion that elastically presses the battery pack.

12. The aerosol-generating device of claim 8, wherein the battery cover further comprises a battery pressurization portion that elastically presses the battery pack.

13. The aerosol-generating device of claim 8, wherein the cover slide groove extends at an incline with respect to an insertion direction of the battery pack.

14. The aerosol-generating device of claim 8, wherein the battery cover further comprises a cover protrusion contacting an end face of the battery pack and pressing the battery pack toward an insertion direction of the battery pack.

15. The aerosol generating device of claim 8, wherein the battery pack further comprises a battery terminal, the battery cover further comprises a cover terminal configured to be electrically connected to the battery terminal,
the battery terminal is arranged on an end face of the battery pack in an insertion direction of the battery pack, and
the cover terminal is arranged on a surface of the battery cover in contact with the battery terminal.
